# EUROPEAN PATENT APPLICATION

(11) **EP 1 158 421 A2**
(43) Date of publication of application: **28.11.2001**
(21) Application number: 00120365.2
(22) Date of filing: 16.09.2000
(51) Int. Cl.: G06F 17/30

(54) **Internet site search service system having a function of building individual meta search engines**

(30) Priority: 16.05.2000 KR 0026067
(71) Applicant: LAS21 Co., Ltd., Kangnam-gu, Seoul (KR)
(72) Inventor: Bae, Kyoung Hwa, Seoul (KR); U Park, Min, Sungnam, Kyunggi-do (KR)
(74) Representative: Weitzel, Wolfgang, Dr.-Ing.

(57) **Abstract**

Disclosed is an internet site search service system having a function of building individual meta search engines, which provides to users field-classified search engine data built in a database in a meta search server if the users of the plural client personal computers are connected to the meta search server having a database with respect to connection data of plural search engines and field-classified data, builds in a database individual meta search engine-building data and membership registration data that the users input for using the individual meta search, connects the plural search engines registered in the individual meta search engine-building data of the user who input specified search terms for the meta search, and provides plural search results to the user after carrying out the meta search.

Accordingly, in the present invention, users select search engines they want from dedicated search engines recommended for plural fields by a meta search server and build their own meta search engines, so that the users do not have to seek a search engine in detail for performing special searches for the corresponding fields, and special information enhanced in quality is rapidly obtained.

## Description

### BACKGROUND OF THE INVENTION

### 1. Field of the Invention

The present invention relates to an internet site search service system having a function of building individual meta search engines, and more particularly to an internet site search service system having a function of building individual meta search engines capable of classifying worldwide search engines into respective speciality fields, recommending search engines to users, and using meta search services through the selections of search engines according to users' tastes.

### 2. Description of the Prior Art

In general, the internet is an open network through which anybody, anywhere in the world, can be freely connected to other computers he wants to hook up with the application of the common protocol of TCP/IP, and which is used for the transmission of basic character information and multimedia information according to the advancement of the data compression technology, together with diverse services such as electronic mails, file transfers, world wide web(WWW), and so on.

Such internet is rapidly spread in its use throughout domestic and foreign countries, so that the importance of the internet is rapidly emphasized as a strategic tool for reconsidering the efficiency and productivity over overall sectors of existing industries. Further, opportunities for brand-new businesses are continuously created through the internet, together with the expansion of business fields, so businessmen who want to use the internet is gradually increased in number.

That is, in recent, Sites are rapidly increased for providing diverse contents such as internet advertisements, internet broadcasts, on-line games, internet newspaper/magazines, search services, portal services, electronic commerce businesses, and so on, as businesses trough the internet.

Accordingly, computer users who want to obtain particular information need to use certain search engines enabling the users to find out numerous sites and various web documents existing in the internet.

In the beginning of internet services, such search engines called 'the first generation search engines' indexes respective sites and web documents at their sides to build a database, and use a searching method for directory services in which users can make access to final documents with a deeper ramification of the searched according to the subject search(or the menu search) of users and the predetermined subject classifications. The Yahoo(http://www.yahoo.com) may be referred to as the typical search engine of the first generation.

However, the increase of the internet, particularly the expansion of the size of the world wide web(WWW) does not allow the subject search as stated above to be smoothly performed. That is, since the materials a search engine holds should be increased in compliance with the explosive expansion of the size of the world wide web(WWW), the method of adding one material by identifying one web page by manual jobs as in the existing first search engine can not catch up the growth of the world wide web(WWW).

Accordingly, a concept of a robot or a spider causes the second generation search engine to appear. The second generation search engine automatically searches and indexes web pages to provide search services. The altavista(http://www.altavista.com) may be the typical second generation engine.

The above second search engine uses a key word search method, and second generation search engines search and provide all documents related to key words users inputs, but the users turn the second generation search engine away since a big volume of searched documents causes inconvenience to the users in that the users have to find out the contents they want from the searched documents again. Accordingly, despite of the burden of many resources in order to overcome the problem the second generation search engine has, the subject search services are still included which are used in the first generation search engine.

As stated above, even though the first and second generation search engines collect diverse documents existing in the internet, even an search engine of Fast Search, http://www.alltheweb.com, which builds the largest documents all over the world among operating search engines at present, collects and holds only 16% of the entire documents existing in the internet. Therefore, since it is difficult for one search engine to catch up the number of web pages which are geometrically progressing, at least three or more search engines should be used to get information that a user wants.

Accordingly, in recent, the meta search engine is being used for performing searches according to search terms that a user requires by utilizing plural dedicated search engines existing all over the world without building separate databases in the search engine.

However, a conventional meta search engine as stated above connects plural search engines contained in databases built therein according to specified search terms that a user inputs to perform searches, but does not provide services of classifying the search engines in the world into subjects, recommending search engines to users, and building a meta search engine of a user's own through a user's selections of parts of the recommended search engines.

Accordingly, inconvenience is caused because of deteriorated preciseness and a lot of unnecessary search results in users' utilizing meta search engines for seeking special information. Further, it is very difficult for users to find out a search engine of rapidly searching information that the users want since too many search engines are actually servicing in the world.

### SUMMARY OF THE INVENTION

In order to solve the above problems, it is an object of the present invention to provide an internet site search service system having a function of building individual meta search engines, capable of rapidly finding out special information that users want as well as of enhancing the quality of search results by classifying worldwide search engines into specialty fields, recommending search engines to users, and using meta search services through the selections of search engines according to users' tastes.

In order to achieve the object, an internet site search service system having a function of building individual meta search engines comprises a communication network for connecting undefined plural communication lines and performing data communications there between; plural client personal computers equipped with communication environments to be connected to an external of providing services of building individual meta search engines open in the communication network, and for inputting and displaying on a screen initial screen data including information of recommending special search engines for fields from the external, outputting to the external membership registration data that users input according to a predetermined data form provided from the external and individual meta search engine-building data, outputting to the external specified search terms that the users who build the individual meta search engines input, and inputting and displaying on the screen search results outputted from the external; plural search engines having in a database index information related to plural sites and web documents in the sites open in the communication network, and for extracting and outputting to the external search results based on the index information built in a database according to specified search terms inputted from the external; and a meta search server for building in a database connection data of the plural search engines open in the communication network and building in a database the plural search engines classified by field, building in a database membership registration data that the users of the plural client personal computers input and the individual meta search engine-building data that the users who confirm information of recommending field-classified special search engines built in the database input, performing communication connections with specific search engines according to the individual meta search engine-building data of the users if certain search terms are inputted from the client personal computers, and inputting and outputting to corresponding client personal computers search results performed according to search terms that users input from corresponding search engines.

Further, an internet site search service method having a function of building individual meta search engines comprises the steps of: (1) building connection data of plural search engines and field-classified data in a database in a meta search server; (2) carrying out connections to the meta search server in accordance with a communication program execution of the users of the plural client personal computers; (3) building in a database individual meta search engines-building data and membership registration data that the users of the client personal computers input for using individual meta searches in the meta search server;(4) connecting plural search engines registered in the individual meta search engine-building data according to specified search terms that the users of the client personal computers input to perform meta searches; and (5) outputting search results inputted from the plural search engines to corresponding users' s client personal computers.

### BRIEF DESCRIPTION OF THE DRAWINGS

The above object and other advantages of the present invention will become more apparent by describing in detail a preferred embodiment thereof with reference to the attached drawings, in which:
FIG. 1 is a block diagram for schematically showing a structure of an internet site search service system having a function of building individual meta search engines according to an embodiment of the present invention;
FIG. 2 is a block diagram for showing in detail a structure of a meta search server of FIG. 1;
FIG. 3 is a flow chart for showing operation processes of an internet site search service method having a function of building individual meta search engines according to an embodiment of the present invention; and
FIG. 4 and FIG. 5 are flow charts for showing in detail operation processes of respective subroutines of FIG. 3.

### DETAILED DESCRIPTION OF THE PREFERRED EMBODIMENT

Hereinafter, an internet site search service system having a function of building individual meta search engines will be described in detail with reference to the attached drawings.

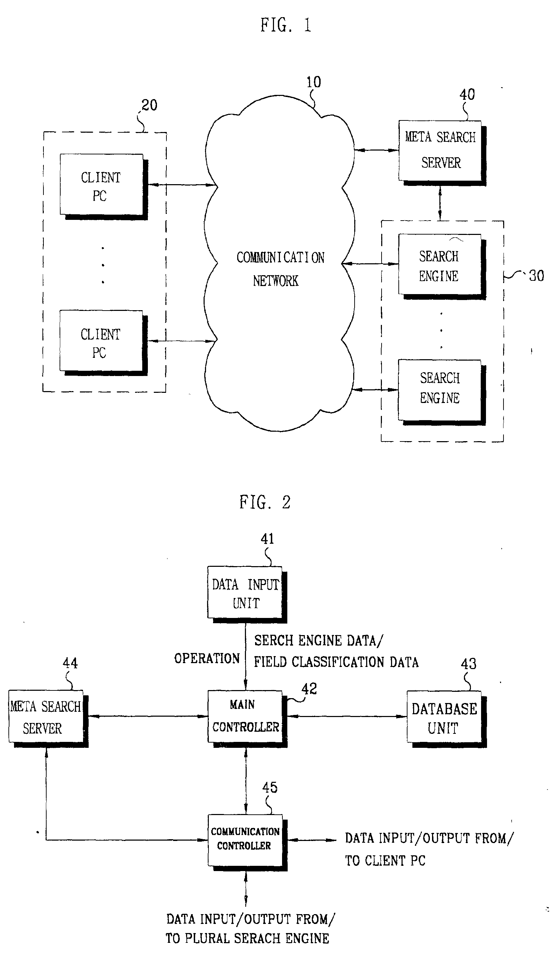

FIG. 1 is a block diagram for schematically showing a structure of an internet site search service system having a function of building individual meta search engines according to an embodiment of the present invention.

As shown in FIG. 1, a communication network 10 connects communication lines between plural client personal computers(PC) 20 and a meta search server 40 and between plural search engines 30 and the meta search server 40 to perform mutual data communications related to the use of individual meta search engines.

Further, the communication network 10 connects communication lines between the plural client personal computers 20 and the plural search engines 30 to perform data communications related to general searches which will be described later, other than the above meta searches.

The plural client personal computers 20 are equipped with communication environments in order to be connected to the meta search server 40 of providing services for building individual meta search engines open to the communication network 10, inputs and displays on a screen initial display data including information recommended by dedicated search engines for various fields such as health, sports, education, computers, and the like from the meta search server 40.

Further, the plural client personal computers 20 outputs to the meta search server 40 membership registration data that a user inputs according to a certain data form provided from the meta search server 40 and individual meta search engine-building data for selecting search engines according to a user's taste, outputs to the meta search server 40 specified search terms that a user who builds the individual meta search engines inputs, and inputs and displays on a screen search results outputted from the meta search server 40.

The plural search engines 30 builds into a database plural sites open in the communication network 10 and index information related to various web documents in the sites, and extracts and outputs to the meta search server 40 search results based on the index information built in a database according to specified search terms inputted from the meta search server 40.

The meta search server 40 builds into a database connection data of the plural search engines 30 open in the communication network 10 while classifying the plural search engines 30 into various fields and building the various fields in a database, and builds into a database the membership registration data that users of the plural client personal computers 20 input and the individual meta search engine-building data that a userwho identifies information of recommending dedicated search engines for fields built in a database inputs.

Further, the meta search server 40 performs communication connections with specific search engines 30 according to individual meta search engine-building data of a user if certain search terms are inputted from each of the client personal computers 20, and inputs and outputs to corresponding client personal computers 20 search results carried out according to the search terms that a user inputs from the plural search engines 30.

Further, FIG. 2 is a block diagram for showing in detail a structure of the meta search server 40 of FIG. 1.

As shown in FIG. 2, the data input unit 41 outputs to a main controller 43, which will be described later, an operation program, which is inputted by a server administrator, for supporting individual meta search engine services which the users of the plural client personal computers 20 use, connection data of permitting connections to the plural search engines 30, and data for classifying the plural search engines 30 into fields.

The main controller 42 stores in a database unit 43, which will be described later, the connection data of the plural search engines 30 inputted through the data input unit 41 and the data for classifying the plural search engines 30 into fields, and stores in the database unit 43 membership registration data that the users of the client personal computers 20 input and individual meta search engine-building data after the communication connection to the meta search server 40.

Further, the main controller 32 controls a meta search engine 44, which will be described later, if specified search terms are inputted from the plural client personal computers 20 to control the communication connections to specific search engines 30 according to individual meta search engine-building data of corresponding users, and outputs the search results carried out from the corresponding search engines 30 to corresponding client personal computers 20 through the communication controller 45 which will be described later.

The database unit 43 stores the connection data of the plural search engines 30 inputted through the data input unit 41 and the data for classifying the plural search engines 30 into fields according to the main controller 42, and stores the membership registration data and the individual meta search engine-building data that the users of the plural client personal computers 20 input.

The meta search engine 44 performs the communication connections with the plural search engines 30 according to the control of the main controller 42 to output the specified search terms that a user inputs to the plural search engines 30 which are in the communication connections, and inputs and outputs to the main controller 42 the search results from the plural search engines 30.

The communication controller 45 inputs and outputs to the main controller 42 the membership registration data that a corresponding user inputs, the individual meta search engine-building data, and specified search terms for meta searches after the communication connections of the plural client personal computers 20, and performs the communication connection to the plural search engines 30 according to the control of the meta search engines 44.

Further, the communication controller 45 inputs the search results carried out from corresponding search engines 30 according to the specified search terms that a user of each of the plural client personal computers 20 inputs and outputs the search results to the meta search engine 44, and outputs the plural search results to the corresponding client personal computers 20 according to the control of the main controller 42.

At this time, the above meta search server 40 finds out sites or web documents having the most appropriate data to the specified search terms that a user inputs from the plural search results inputted from the plural search engines 30 and performs a function of recommending the sites and web documents to the corresponding user of the client personal computers 20, and automatically extracts duplicated search results in case that the sources of the documents searched through the plural search engines 30 are the same, for example, in case that URLs are the same, to be provided to the users of the client personal computers 20.

Further, the meta search server 40 may provide a service by which users of the client personal computers 20 who use individual meta search engines can arbitrarily adjust the time required for the meta searches.

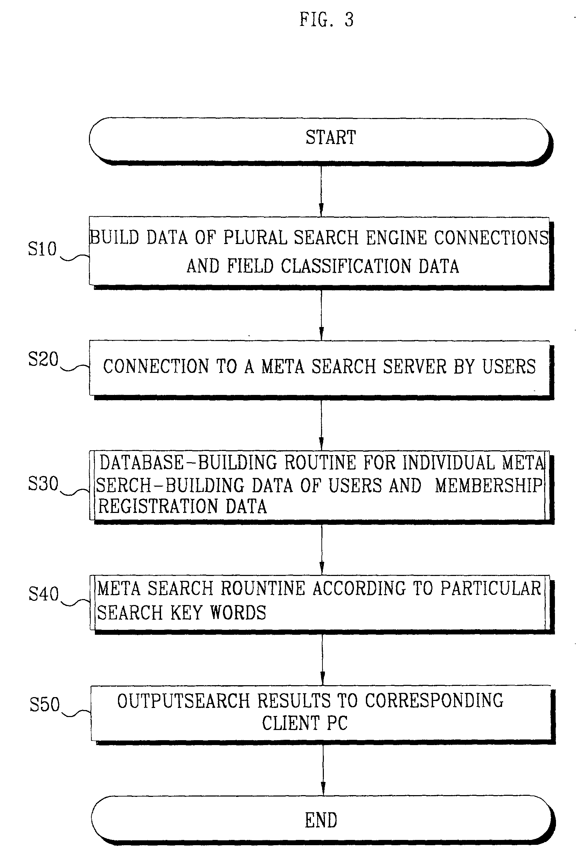

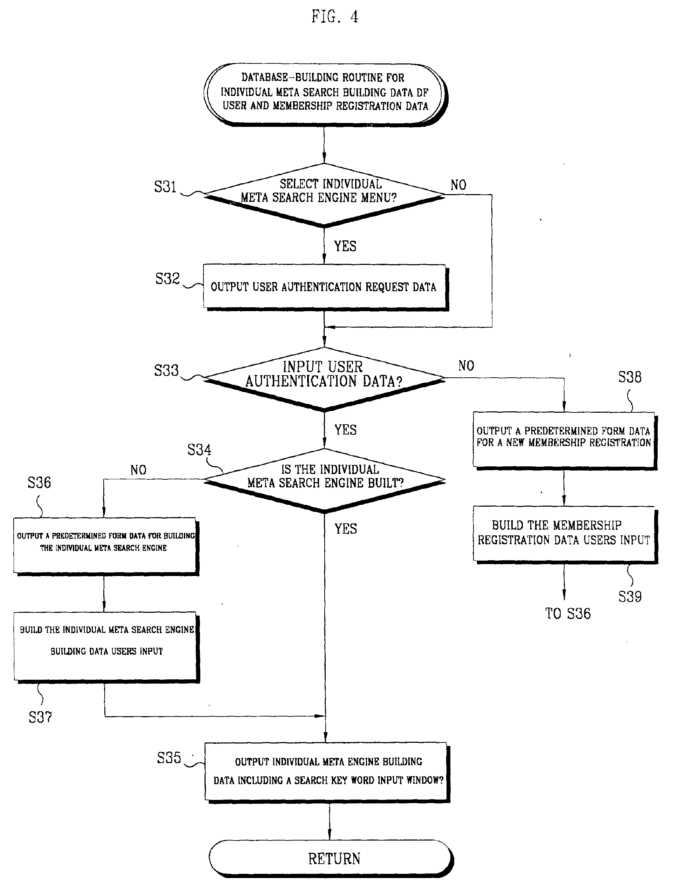

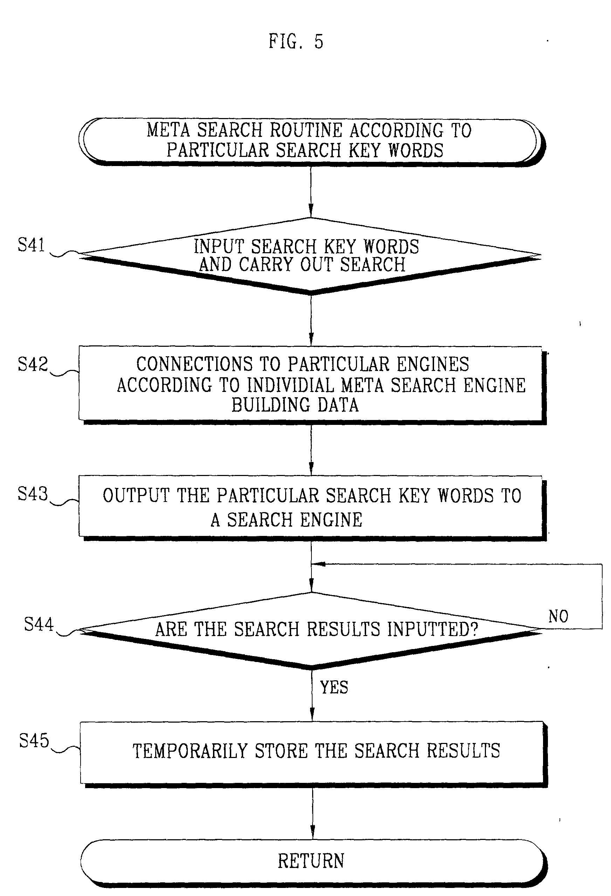

Next, an internet site search service method having a function of building individual meta search engines according to an embodiment of the present invention will be described in detail with reference to FIG. 3 to FIG. 5.

FIG. 3 to FIG. 5 are flow charts for showing in detail operation processes of an internet site search service method having a function of building individual meta search engines according to an embodiment of the present invention.

First of all, the connection data and the field-distinguishing data of enabling connections to be made to the plural search engines 30 are built in a database in the meta search server 40 of providing services through which numerous search engines 30 open in the communication network 10 are built into individual meta search engines according to a user's taste(S10).

That is, in order to help the users of the client personal computers 20 build the individual meta search engines, the meta search server 40 computerizes in a database respective search engines 30 as special search engines for various fields such as health, sports, education, computers, and so on with reference to the most common information the plural search engines 30 hold, and recommends the special search engines to the users of the client personal computers 20.

As stated above, after building the database with respect to the connection data and the field-distinguishing data of the plural search engines 30 in the meta search server 40, the meta search server 40 identifies whether communication connections are performed according to communication program executions of the users of the plural client personal computers 20(S20).

Further, after the communication connections are made for the users of the client personal computers 20, the meta search server 40 builds into a database the individual meta search engine-building data and the membership registration data that the users of the client personal computers 20 input for the use of individual meta searches(S30).

Described in more detail for the above, the meta search server 40 outputs initial display data including recommendation information of special search engines for fields to the client personal computers 20 which are in the communication connections, and judges whether a menu is selected for building individual meta search engines by the users of the client personal computers 20 who confirms the initial display data(S31).

As a judgement result, if the users of the client personal computers 20 select the menu for building the individual meta search engines, the meta search server 40 outputs to the corresponding client personal computers 20 data for requesting users' authentications(S32), and judges whether the users of the corresponding client personal computers 20 input user authentication data such as Ids, passwords, and so on(S33).

Further, if the user authentication data are inputted from the client personal computers 20, the meta search server 40 verifies whether the corresponding users are registered members through the inputted authentication data, and judges whether the corresponding users of the client personal computers 20 have individual meta search engines previously built(S34).

As a judgement result, in case that the users have the previously built individual meta search engines, the meta search server 40 outputs to the corresponding client personal computers 20 the individual meta search engine-building data including a search term input window(S35).

However, as a judgement result in the step S35, in case that the users have not the previously built individual meta search engines, the meta search server 40 outputs to the corresponding client personal computer 20 predetermined form data for inputting individual meta search engine-building data(S36), and builds in a database the individual meta search engine-building data that the users of the corresponding client personal computers 20 input(S37).

However, as a judgement result in the above step S33, if the user authentication data is not inputted from the client personal computers 20, the meta search server 40 identifies whether the users select the new membership registration, and outputs to the corresponding client personal computers 20 predetermined form data for the new membership registration(S38).

Further, a database is built with respect to the membership registration data such as Ids, passwords, and so on that the users of the client personal computers 20 input, and the above step S36 is performed for outputting the predetermined form data for inputting the individual meta search engine-building data(S39).

After building te individual meta search engines through the above step S30, te meta search server 40 connects the specific search engines 30 registered in the individual meta search engine-building data according to specified search terms that the users of the client personal computers 20 input to perform meta searches(S40).

Described in detail for the above, the meta search server 40 inputs certain search terms for the meta searches from the users of the client personal computers 20 who build the individual meta search engines and judges whether the execution of the meta searches is selected(S41), and, if the execution of the meta searches is selected by users, performs communication connections with specific search engines 30 according to the individual meta search engine-building data built as a database(S42).

Further, the meta search server 40 outputs to the connected search engines 30 the predetermined search terms that the users of the client personal computers 20 input in order for the meta searches to progress according to the corresponding search terms(S43).

Therefore, the meta search server 40 judges whether search results according to the specified search terms that the users input are inputted from the plural search engines 30(S44) and temporarily stores the search results inputted from the plural search engines 30(S45).

Lastly, the meta search server 40 outputs to the corresponding client personal computers 20 the plural search results searched in the specific search engines 30 through the above step S40 and ends the individual meta search services(S50).

As stated above, according to the internet site search service system having a function of building individual meta search engines, users select search engines they want from dedicated search engines recommended for plural fields such as health, sports, education, computers from a meta search server and build meta search engines suitable for their tastes, so that the users do not have to seek a search engine in detail for performing special searches for the corresponding fields.

Further, the users who seek special information rapidly find out desired search results through the individual meta search engines, and the quality of the search results is greatly enhanced.

Although the present embodiment of the present invention has been described, it will be understood by those skilled in the art that the present invention should not be limited to the described preferred embodiment, but various changes and modifications can be made within the spirit and scope of the present invention as defined by the appended claims.

## Claims

1. An internet site search service system having a function of building individual meta search engines, comprising:
a communication network for connecting undefined plural communication lines and performing data communications therebetween;
plural client personal computers equipped with communication environments to be connected to an external of providing services of building individual meta search engines open in the communication network, and for inputting and displaying on a screen initial screen data including information of recommending special search engines for fields from the external, outputting to the external membership registration data that users input according to a predetermined data form provided from the external and individual meta search engine-building data, outputting to the external specified search terms that the users who build the individual meta search engines input, and inputting and displaying on the screen search results outputted from the external;
plural search engines having in a database index information related to plural sites and web documents in the sites open in the communication network, and for extracting and outputting to the external search results based on the index information built in a database according to specified search terms inputted from the external; and
a meta search server for building in a database connection data of the plural search engines open in the communication network and building in a database the plural search engines classified by field, building in a database membership registration data that the users of the plural client personal computers input and the individual meta search engine-building data that the users who confirm information of recommending field-classified special search engines built in the database input, performing communication connections with specific search engines according to the individual meta search engine-building data of the users if certain search terms are inputted from the client personal computers, and inputting and outputting to corresponding client personal computers search results performed according to search terms that users input from corresponding search engines.

2. The internet site search service system as claimed in claim 1, wherein the meta search server includes:
a data input unit for inputting an operation program of supporting by a server administrator meta search services that the users of the plural client personal computers use, connection data of permitting connections to the plural search engines, and data for classifying the plural search engines by field;
a main controller for storing the connection data of the plural search engines and the data for classifying the plural search engines by field inputted through the data input unit, storing the membership registration data that the users of the plural client personal computers input and the individual meta search engine-building data, controlling communication connections with specific search engines according to individual meta search engine-building data of users if search terms are inputted from the client personal computers, and outputting search results carried out from corresponding search engines;
a database unit for storing the connection data of the plural search engines and the data for classifying the plural search engines by field inputted through the data input unit according to the control of the main controller, and storing the membership registration data that the users of the plural client personal computers input and the individual meta search engine-building data;
a meta search engine for carrying out communication connections with the plural search engines according to the control of the main controller and outputting specified search terms that users input to the plural search engines, and inputting and outputting to the main controller search results from the plural search engines; and
a communication controller for inputting and outputting to the main controller the membership registration data that users input after the communication connections with the plural client personal computers, individual meta search engine-building data, and specified search terms for meta searches, carrying out the communication connections with the plural search engines according to the control of the meta search engines, inputting and outputting to the meta search engines search results performed in the search engines according to specified search terms that users input, and outputting plural search results to the corresponding personal computers according to the main controller.

3. An internet site search service method having a function of building individual meta search engines, comprising the steps of:
(1) building connection data of plural search engines and field-classified data in a database in a meta search server;
(2) carrying out connections to the meta search server in accordance with a communication program execution of the users of the plural client personal computers;
(3) building in a database individual meta search engines-building data and membership registration data that the users of the client personal computers input for using individual meta searches in the meta search server;
(4) connecting plural search engines registered in the individual meta search engine-building data according to specified search terms that the users of the client personal computers input to perform meta searches; and
(5) outputting search results inputted from the plural search engines to corresponding users' s client personal computers.

4. The internet site search service method as claimed in claim 3, wherein the step(3) includes the steps of:
(3-1) judging whether a menu for the individual meta search engine is selected by the users of the client personal computers who confirm initial display data including information of recommending field-classified search engines outputted from the meta search server;
(3-2) outputting user authentication request data to the client personal computers which select a menu for the individual meta search engine from the meta search server;
(3-3) judging whether the user authentication data is inputted by the users of the client personal computers;
(3-4) confirming whether the user authentication data is for registered membership through the authentication data that the users input in the meta search server if the user authentication data is inputted and judging whether the individual meta search engine is built;
(3-5) outputting individual meta search engine-building data including a search term input window to the client personal computers in case that the individual meta search engine is built;
(3-6) outputting predetermined form data for inputting the individual meta search engine-building data in case that the individual meta search engine is not built;
(3-7) building in a database the individual meta search engine-building data that the users input;
(3-8) outputting the predetermined form data for a new membership registration from the meta search server to the corresponding client personal computers if the user authentication data is not inputted as a judgement result in the step(3-3); and
(3-9) building in a database the membership registration data that the users of the client personal computers input and performing processes from the step(3-6).

5. The internet site search service method as claimed in claim 3, wherein the step(4) includes the steps of:
(4-1) inputting certain search terms for the meta search from the users of the client personal computers in the meta search server and judging if a meta search execution is selected;
(4-2) carrying out the communication connections with specific search engines according to the individual meta search engine-building data built in the database in the meta search server if the meta search execution is selected by the users;
(4-3) outputting the certain search terms that the users of the client personal computers input to a connected search engine;
(4-4) judging whether search results according to the specified search terms that the users input is inputted from the plural search engine; and
(4-5) temporarily storing the search results inputted from the plural search engine.
